# EUROPÄISCHE PATENTSCHRIFT

(11) **EP 2 535 370 B1**
(45) Veröffentlichungstag und Bekanntmachung des Hinweises auf die Patenterteilung: **04.09.2019**
(21) Anmeldenummer: 12170713.7
(22) Anmeldetag: 04.06.2012
(51) Int. Cl.: C08J 7/04, B60R 13/06

(54) **Verfahren zur Herstellung eines zumindest abschnittsweise lackierten Kunststoffteils, Kunststoffteil sowie Grundkörper für dessen Herstellung**
Method for producing a plastic section which is at least partially varnished, plastic section and base for producing same
Procédé de fabrication d'une pièce en plastique peinte au moins sur une partie, pièce en plastique ainsi que le corps de base pour sa fabrication

(30) Priorität: 06.06.2011 DE 102011076959
(43) Veröffentlichungstag der Anmeldung: 19.12.2012
(73) Patentinhaber: Samvardhana Motherson Innovative Autosystems B.V. & Co. KG, 63486 Bruchköbel (DE)
(72) Erfinder: Trier, Martin, 96247 Michelau (DE)
(74) Vertreter: Isarpatent

(56) Entgegenhaltungen:
- EP-A2- 1 503 030
- DE-A1- 4 441 688
- DE-A1-102007 011 070
- DE-A1-102008 022 224
- US-A1- 2011 052 856
- US-B1- 6 235 358

## Beschreibung

### GEBIET DER ERFINDUNG

Die vorliegende Erfindung betrifft Verfahren zur Herstellung eines zumindest abschnittsweise lackierten Kunststoffteils. Darüber hinaus betrifft die Erfindung ein zumindest abschnittsweise lackiertes Kunststoffteil, welches nach einem derartigen Verfahren hergestellt ist, sowie einen Grundkörper für die Herstellung eines zumindest abschnittsweise lackierten Kunststoffteils.

### TECHNISCHER HINTERGRUND

Obwohl die vorliegende Erfindung auf unterschiedlichste Kunststoffteile zu Dekor-, Verkleidungs- und Abdeckzwecken zum Beispiel auf dem Gebiet der Kraftfahrzeugtechnik, aber auch auf anderen technischen Gebieten wie beispielsweise bei der Ausstattung beliebiger Straßen- oder Schienenfahrzeuge, Luftfahrzeuge oder Bauwerke nützlich sein kann, werden die Erfindung und die ihr zugrunde liegende Problematik im Folgenden anhand einer Dachzierleiste für ein Kraftfahrzeug und deren Herstellung näher erläutert, ohne die Erfindung jedoch dahingehend einzuschränken.

Zum Abdecken und Abdichten einer Fuge zwischen einem Dachblech und einem Seitenwandblech einer Karosserie eines Kraftfahrzeugs, insbesondere eines Automobils, kommen heutzutage Dachzierleisten zum Einsatz. Damit soll oft auch das äußere Erscheinungsbild des Fahrzeugs verbessert werden. Derartige Dachzierleisten werden jedoch oftmals nicht durch den Automobilhersteller selbst gefertigt, sondern durch Zulieferer produziert, angeliefert und anschließend in einem Werk des Automobilherstellers verbaut. In der Automobilindustrie werden im Wesentlichen gleiche Fahrzeuge bzw. Fahrzeugklassen oftmals in verschiedenen Automobilwerken, welche sich ggf. auf unterschiedlichen Kontinenten befinden, gefertigt. Um eine gleiche Qualität an allen Automobilwerken zu gewährleisten werden dabei in der Regel dieselben Lieferanten für die Lieferung bestimmter Teile, insbesondere für Dachzierleisten, beauftragt. Dabei ist es meist ein Wunsch der Automobilhersteller einen hohen Local Content, d.h. einen möglichst hohen in der Nähe des Automobilwerkes lokal erbrachten Anteil an der Gesamtwertschöpfung zu erreichen.
Ferner ist es bekannt, dass Käufer und Nutzer von Automobilen heutzutage einerseits Wert auf ein hochwertiges und ästhetisches Aussehen des Fahrzeugs legen, andererseits ihnen aber auch ein geringer Kraftstoffverbrauch des Fahrzeugs wichtig ist. Durch die zumindest teilweise Herstellung von Dekor-, Abdeck- oder Verkleidungsteilen, wie etwa Dachzierleisten, aus Kunststoffmaterialien kann eine Reduktion des Fahrzeuggewichts und dadurch auch eine günstige Auswirkung auf den Kraftstoffverbrauch erzielt werden.

Entsprechend der jeweiligen Karosserieform kann eine Dachzierleiste aufgrund ihrer Länge und einer der Karosserieform folgenden Krümmung ein sperriges, schwierig zu handhabendes Bauteil darstellen. Da jedoch an die Formgenauigkeit und die Oberflächengüte aufgrund der Sichtbarkeit derartiger Leisten hohe Anforderungen gestellt werden, muss beim Transport oder Versand fertiggestellter Dachzierleisten von dem Zulieferer zu dem Automobilhersteller ein großer Aufwand betrieben werden, um ein Verformen der Dachzierleisten unter dem Eigengewicht und anderen Krafteinwirkungen, ein Verkratzen und dergleichen zu vermeiden. Die Länge und gekrümmte Form der Dachzierleisten erfordern aufwändige Transportvorrichtungen, die ein gegenseitiges Berühren der einzelnen Leisten verhindern. Fertig gestellte Dachzierleisten können somit nicht dicht gepackt werden. Teure Transportvorrichtungen zum Stützen der Dachzierleisten beim Transport und unter Umständen aufwändiges Verpackungsmaterial, sowie die geringe Ladungsdichte durch nur geringe Ausnutzung des Ladevolumens führen zu einer ungünstigen Steigerung der Transportkosten.

Dies ist ein Zustand, des es zu verbessern gilt.

Die DE 10 2007 011070 A1 beschreibt ein Erzeugnis mit verbesserter Lackhaftung.

Die DE 10 2008 022224 A1 beschreibt ein Verfahren zum Herstellen eines Kunststoffformteils mit einer Lackbeschichtung.

Die EP 1 503 030 A2 beschreibt eine Abdeckung für einen Rollladenkasten.

Die US 6 235 358 B1 beschreibt einen Verpackungscontainer.

Die DE 44 41 688 A1 beschreibt ein Gestell zum Transport von Stoßstangen.

### ZUSAMMENFASSUNG DER ERFINDUNG

Vor diesem Hintergrund liegt der vorliegenden Erfindung die Aufgabe zugrunde, die vorgenannten Nachteile bei der Bereitstellung qualitativ hochwertiger, formgenauer Kunststoffteile zu vermeiden und die anfallenden Transportkosten zu vermindern, ohne Einbußen bei der Qualität der Kunststoffteile hinnehmen zu müssen.

Erfindungsgemäß wird diese Aufgabe durch ein Verfahren zur Herstellung eines zumindest abschnittsweise lackierten Kunststoffteils mit den Merkmalen des Patentanspruchs 1, durch ein Verfahren zur Herstellung eines zumindest abschnittsweise lackierten Kunststoffteils mit den Merkmalen des Patentanspruchs5 und/oder durch ein zumindest abschnittsweise lackiertes Kunststoffteil mit den Merkmalen des Patentanspruchs 11 gelöst.

Demgemäß ist ein erstes Verfahren zur Herstellung eines zumindest abschnittsweise lackierten Kunststoffteils, welches einen ein Kunststoffmaterial enthaltenden Grundkörper aufweist, vorgesehen, welches die folgenden Verfahrensschritte aufweist:
- zur Erzeugung des Grundkörpers wird das Kunststoffmaterial extrudiert;
- der Grundkörper wird zumindest abschnittsweise lackiert; und
- der zumindest abschnittsweise lackierte Grundkörper wird in der Weise verpackt, dass der zumindest abschnittsweise lackierte Grundkörper transportiert oder versandt werden kann, ohne dabei beschädigt zu werden.

Das zumindest abschnittsweise lackierte Kunststoffteil ist hierbei insbesondere für die Anwendung in einem Kraftfahrzeug bestimmt.

Darüber hinaus wird erfindungsgemäß ein zweites Verfahren zur Herstellung eines zumindest abschnittsweise lackierten Kunststoffteils bereitgestellt. Das Kunststoffteil weist einen ein Kunststoffmaterial enthaltenden Grundkörper auf, und ist insbesondere für ein Kraftfahrzeug vorgesehen. Das erfindungsgemäße zweite Verfahren weist die folgenden Schritte auf:
- zur Erzeugung des Grundkörpers wird das Kunststoffmaterial extrudiert;
- der Grundkörper wird zumindest abschnittsweise lackiert; und
- der zumindest abschnittsweise lackierte Grundkörper wird streckgebogen, um das zumindest abschnittsweise lackierte Kunststoffteil zu bilden.

Weiterhin ist ein zumindest abschnittsweise lackiertes Kunststoffteil vorgesehen, welches mittels eines derartigen ersten Verfahrens oder eines derartigen zweiten Verfahrens hergestellt ist.

Ferner wird ein streckbiegbarer Grundkörper für die Herstellung eines zumindest abschnittsweise lackierten Kunststoffteils, insbesondere für ein Kraftfahrzeug, vorgesehen. Der streckbiegbare Grundkörper weist ein durch Extrusion geformtes Kunststoffmaterial auf. Darüber hinaus ist der streckbiegbare Grundkörper zumindest abschnittsweise lackiert.

Die der vorliegenden Erfindung zugrunde liegende Idee besteht darin, den mit Hilfe eines Extrusionsverfahrens gefertigten Grundkörper für das Kunststoffteil vor einer weiteren Formgebung für die er vorgesehen ist, insbesondere einer Formgebung durch Streckbiegen, zunächst zu lackieren. Das Extrudieren und das Lackieren können zum Beispiel bei einem Zulieferunternehmen erfolgen. Der zumindest abschnittsweise lackierte Grundkörper kann mit erheblich geringerem Aufwand verpackt und transportiert oder versandt werden als das fertige Kunststoffteil. Auch kann der zumindest abschnittsweise lackierte Grundkörper einfacher zwischengelagert werden als das fertige Kunststoffteil. Aufwändige Vorrichtungen, die beim Transport, beim Versand oder bei der Zwischenlagerung fertiger Kunststoffteile erforderlich sind, um während des Transports oder der Lagerung gegenseitige Berührung sowie unzulässige Zug-, Druck- oder Biegebelastungen, die zu einer plastischen Verformung der fertigen Kunststoffteile führen und deren Formgenauigkeit somit beeinträchtigen könnten, zu unterbinden, sind beim Einsatz der erfindungsgemäßen Verfahren nicht erforderlich. Transport- und/oder Zwischenlagerung werden somit durch das erste und das zweite erfindungsgemäße Verfahren jeweils erheblich vereinfacht und verbilligt. Das Lackieren, durch das die Oberfläche des Grundkörpers geschützt und dem herzustellenden Kunststoffteil ein hochwertiges Aussehen verliehen wird, kann auf kostengünstige und wirtschaftliche Weise bei dem Zulieferer erfolgen. Aufgrund der erfindungsgemäß stark verbesserten Transport- und Zwischenlagerungseigenschaften kann der Zulieferer für seine Teile standortunabhängig eine gleich hohe Qualität liefern, indem er beispielsweise alle Grundkörper an einer einzigen Produktionsstätte extrudiert und lackiert. Insbesondere können alle Grundkörper in derselben Lackieranlage lackiert werden. Daher muss der Lieferant erfindungsgemäß keine Lackierkapazität an dem zu beliefernden Standort bereithalten.

Vorteilhafte Ausgestaltungen und Weiterbildungen ergeben sich aus den weiteren Unteransprüchen sowie aus der Beschreibung unter Bezugnahme auf die Figur der Zeichnung.

Gemäß einem Schritt des erfindungsgemäßen ersten Verfahrens wird der zumindest abschnittsweise lackierte Grundkörper bei dem Verpacken zusammen mit weiteren, zumindest abschnittsweise lackierten Grundkörpern gepackt. Da die zumindest abschnittsweise lackierten Grundkörper noch nicht die Endform des herzustellenden Kunststoffteils aufweisen, und weil auf aufwändige, komplizierte und voluminöse Vorrichtungen zum Halten und Unterstützen des Transportguts verzichtet werden kann, gelingt es, eine Anzahl zumindest abschnittsweise lackierter Grundkörper dicht zu packen und die Ladungsdichte beim Transport erheblich zu verbessern. Dies führt zu einer erheblichen Verminderung der Transportkosten je Stück. Beispielsweise können die zumindest abschnittsweise lackierten Grundkörper derart dicht gepackt werden, dass sie ohne Haltevorrichtungen in einer einfachen Kiste oder auf einer Palette nebeneinander und/oder aufeinander gestapelt werden können. Dabei reichen einfache Einlagen, beispielsweise aus Schaumstoff, Blisterfolie, Karton oder dergleichen, zwischen den zumindest abschnittsweise lackierten Grundkörper aus, um diese zumindest ausreichend voneinander zu beabstanden und Beschädigungen beim Transport zu vermeiden. Damit kann die Packungsdichte im Vergleich zum herkömmlichen Transport von fertig geformten Kunststoffteilen in einer Vorrichtung zum Halten und Unterstützen um das 10 bis 20-fache, insbesondere um das 12,5 bis 17,5-fache und bevorzugt um das 14 bis 16-fache gesteigert werden.

Die Packungsdichte der verpackten, zumindest abschnittsweise lackierten Grundkörper Packungsdichte liegt in einer Ausführungsform bei 350 bis 750 Stück/m³, insbesondere bei 450 bis 650 Stück/m³. In einer bevorzugten Ausführungsform liegt die Packungsdichte zwischen 500 und 600 Stück/m³. Somit ist eine sehr dichte Packung der zumindest Abschnittsweise lackierten Grundkörper und folglich eine hohe Ausnutzung des Ladevolumens beim Transport oder Versenden und/oder Zwischenlagern gewährleistet.

In einem weiteren Schritt des erfindungsgemäßen ersten Verfahrens wird der zumindest abschnittsweise lackierte Grundkörper nach dem Verpacken transportiert oder versandt und/oder zwischengelagert. Dadurch kann der zumindest abschnittsweise lackierte Grundkörper von einem Zulieferer zu einem Automobilhersteller befördert werden.

Gemäß einem weiteren Schritt des erfindungsgemäßen ersten Verfahrens wird der zumindest abschnittsweise lackierte Grundkörper nach dem Transportieren oder Versenden entpackt. Hierbei wird der zumindest abschnittsweise lackierte Grundkörper nachfolgend zur Bildung des zumindest abschnittsweise lackierten Kunststoffteils streckgebogen. Durch das Streckbiegen kann die angestrebte Endform des zumindest abschnittsweise lackierten Kunststoffteils hergestellt werden. Dadurch, dass statt des fertigen Kunststoffteils der zumindest abschnittsweise lackierte Grundkörper transportiert oder versandt wird, und die Formgebung durch Streckbiegen erst nach dem Transportieren oder Versenden und Entpacken vorgenommen wird, kann der Transport oder der Versand, wie vorstehend bereits beschrieben, mit weniger Aufwand, kostengünstiger und einfacher erfolgen. Somit kann z. B. der Herstellungsschritt des Streckbiegens, der den zumindest abschnittsweise lackierten Grundkörper raumgreifend macht, in der Nähe des jeweiligen Automobilwerks erfolgen. Damit wird der Local Content erhöht. Gleichzeitig braucht zusätzlich keine Lackierkapazität bereitgehalten werden, weil der zumindest abschnittsweise lackierte Grundkörper bereits vor dem Streckbiegen zumindest abschnittsweise lackiert vorliegt. Somit kann an verschiedenen Automobilwerken an unterschiedlichen Standorten eine gleiche Oberflächenqualität erreicht werden, ohne dafür an jedem Standort eine Lackieranlage vorhalten zu müssen.

Gemäß einer Ausgestaltung des erfindungsgemäßen zweiten Verfahrens wird der zumindest abschnittsweise lackierte Grundkörper vor dem Streckbiegen transportiert oder versandt. Der Prozess des Streckbiegens, der den zumindest abschnittsweise lackierten Grundkörper raumgreifend macht, kann damit erst unmittelbar in der Nähe des zu beliefernden Standortes, insbesondere eines Automobilwerks, vorgenommen werden. Hierbei ergeben sich wiederum die vorgenannten Vorteile beim Transportieren oder Versenden, insbesondere durch die erheblich verbesserte Ladungsdichte und die Einsparung aufwändiger Transportvorrichtungen oder teuren Verpackungsmaterials. Zudem ergeben sich die bereits erläuterten Vorteile des höheren Local Contents, der gleich hohen Qualität und Einsparung von Lackieranlagen vor Ort.

In einer Weiterbildung der erfindungsgemäßen Verfahren wird der zumindest abschnittsweise lackierte Grundkörper bei dem Streckbiegen in der Weise gekrümmt, dass eine Längsrichtung des zumindest abschnittsweise lackierten Kunststoffteils einer zweidimensionalen oder dreidimensionalen Raumkurve folgt. Gerade bei in dieser Weise gekrümmten Kunststoffteilen wirken sich die vorstehend beschriebenen Vorteile der erfindungsgemäßen Verfahren zum Beispiel beim Transport oder Versand besonders vorteilhaft aus, da in dieser Weise gekrümmte Kunststoffteile in Handhabung, Transport und/oder Zwischenlagerung besonders viel Aufwand erfordern.

Gemäß einer weiteren Weiterbildung der erfindungsgemäßen Verfahren werden Enden des zumindest abschnittsweise lackierten Kunststoffteils nach dem Streckbiegen beschnitten, um das zumindest abschnittsweise lackierte Kunststoffteil mit einer vorbestimmten Länge zu versehen. Überstände an den Enden des streckgebogenen Kunststoffteils können dadurch entfernt werden. Diese Überstände können insbesondere ebenfalls zumindest abschnittsweise lackiert sein, sodass die Stelle der Beschneidung des Kunststoffteils nicht durch die Lackierung vorbestimmt und somit flexibler vorsehbar ist. Alternativ können die Enden des Grundkörpers von Anfang an auch zumindest abschnittsweise von der Lackierung ausgespart sein, um so den Lackverbrauch zu minimieren. Somit sind die entfernten Überstände zumindest abschnittsweise nicht lackiert

Bei einer weiteren vorteilhaften Ausgestaltung der erfindungsgemäßen Verfahren wird der Grundkörper in der Weise als ein langgestrecktes Profil ausgebildet, dass eine Längsrichtung des Grundkörpers im Wesentlichen geradlinig verläuft. Zumindest abschnittsweise lackierte Grundkörper, welche in dieser Weise ausgebildet sind, lassen sich besonders gut und einfach zwischenlagern oder transportieren sowie mit hoher Packungsdichte versenden. Beispielsweise können die zumindest abschnittsweise lackierten Grundkörper besonders vorteilhaft derart dicht gepackt werden, dass sie ohne Haltevorrichtungen, z.B. in einer einfachen Kiste oder auf einer Palette, nebeneinander und/oder aufeinander gestapelt werden können. Zwischen den zumindest abschnittsweise lackierten Grundkörpern können dabei Einlagen aus üblichen Verpackungsmaterialien, beispielsweise aus Schaumstoff, Blisterfolie, Karton oder dergleichen, vorgesehen sein. Damit kann die Packungsdichte im Vergleich zum herkömmlichen Transport von fertig geformten Kunststoffteilen in einer Vorrichtung zum Halten und Unterstützen um das 10 bis 20-fache, insbesondere um das 12,5 bis 17,5-fache und bevorzugt um das 14 bis 16-fache gesteigert werden. Das heißt, es kann bezogen auf das Volumen, z. B. der jeweiligen Verpackungseinheit, eine um diese Faktoren höhere Stückzahl verpackt bzw. transportiert oder versendet und/oder zwischengelagert werden. Die Packungsdichte der zumindest langgestreckten Profile in der Verpackung liegt in einer Ausführungsform bei 350 bis 750 Stück/m³, insbesondere bei 450 bis 650 Stück/m³. In einer bevorzugten Ausführungsform liegt die Packungsdichte auch hier zwischen 500 und 600 Stück/m³.

In einer bevorzugten Ausgestaltung der erfindungsgemäßen Verfahren erfolgt das zumindest abschnittsweise Lackieren des Grundkörpers mit einem Lack, welcher einen Kunststoff aus der Gruppe der Polyurethane aufweist. Hierdurch wird der Lackierung des Grundkörpers eine Elastizität verliehen, die bewirkt, dass bei einem nachfolgenden Streckbiegen des zumindest abschnittsweise lackierten Grundkörpers ein Abplatzen der Lackschicht oder der Lackschichten vermieden werden kann. Des Weiteren können damit auch Verfärbungen und andere optische Fehler an der Oberfläche, insbesondere weißliche Verfärbungen, an gebogenen Stellen vermieden werden. Das Streckbiegen des zumindest abschnittsweise lackierten des Grundkörpers ist somit ohne Qualitätsverlust der zumindest abschnittsweise lackierten Oberfläche möglich.

In einer bevorzugten Ausgestaltung kann das Lackieren des Grundkörpers mit einem mit zwei oder mehr Lackschichten ausgebildeten Lacksystem erfolgen, wobei zumindest eine der Lackschichten Polyurethan enthält. Somit wird der Lackierung die Elastizität mit den genannten Vorteilen verliehen.

Bei einer Ausgestaltung des streckbiegbaren Grundkörpers ist der streckbiegbare Grundkörper als ein langgestrecktes Profil ausgebildet, wobei eine Längsrichtung des streckbiegbaren Grundkörpers im Wesentlichen geradlinig verläuft. Derartige Grundkörper können bei Transport und Lagerung vorteilhaft eng gepackt werden und erfordern hierfür keine aufwändigen Vorrichtungen oder Verpackungen.

In einer weiteren Ausgestaltung des Grundkörpers ist der streckbiegbare Grundkörper mit einem einen Kunststoff aus der Gruppe der Polyurethane aufweisenden Lack lackiert. Ein derartiger Grundkörper kann nach dem Lackieren streckgebogen werden, ohne dass der Lack abplatzt oder sich verfärbt.

Bei einer bevorzugten Ausgestaltung der Erfindung ist das zumindest abschnittsweise lackierte Kunststoffteil als eine Dachzierleiste, insbesondere für ein Automobil, ausgebildet.

Im Rahmen der vorliegenden Erfindung kann der Grundkörper durch Extrudieren aus einem einzigen Kunststoffmaterial, aber beispielsweise auch durch Co-Extrudieren mehrerer Stränge gleicher oder verschiedener Kunststoffmaterialien, oder auch durch Co-Extrudieren eines oder mehrerer Kunststoffmaterialien und einer Armierung, die beispielsweise aus Metall ausgebildet sein kann, hergestellt werden. Das Kunststoffteil soll im Rahmen der vorliegenden Erfindung als ein mit einem oder mehreren Kunststoffen ausgebildetes Teil verstanden werden, bei dem das Vorliegen einer beispielsweise beim Extrudieren ganz oder teilweise durch Kunststoff umschlossenen Metallarmierung oder anderen Armierung nicht ausgeschlossen ist.

Die obigen Ausgestaltungen und Weiterbildungen lassen sich, sofern sinnvoll, beliebig miteinander kombinieren. Weitere mögliche Weiterbildungen, Implementierungen und Ausgestaltungen der Erfindung umfassen auch nicht ausdrücklich genannte Kombinationen von zuvor oder im Folgenden bezüglich der Ausführungsbeispiele beschriebenen Merkmale der Erfindung. Dabei wird der Fachmann insbesondere auch Einzelaspekte als Verbesserungen oder Ergänzungen zu der jeweiligen Grundform der vorliegenden Erfindung hinzufügen.

### INHALTSANGABE DER ZEICHNUNG

Die vorliegende Erfindung wird nachfolgend anhand des in der schematischen Figur der Zeichnungen angegebenen Ausführungsbeispiels näher erläutert. Es zeigt:
- Figur 1: ein Verfahren zur Herstellung eines zumindest abschnittsweise lackierten Kunststoffteils gemäß einem Ausführungsbeispiel der Erfindung;
- Figur 2a: eine Darstellung verpackter, dicht gepackter, zumindest abschnittsweise lackierter Grundkörper in einer ersten Ansicht von vorne;
- Figur 2b: die verpackten, dicht gepackten, zumindest abschnittsweise lackierten Grundkörper aus Figur 2a in einer zweiten Ansicht von oben;
- Figur 3: eine Darstellung von verpackten, bereits gebogenen Kunststoffteilen.

Die beiliegenden Zeichnungen sollen ein weiteres Verständnis der Ausführungsformen der Erfindung vermitteln. Sie veranschaulichen eine Ausführungsform und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Hierbei sind die Elemente der Zeichnungen nicht notwendigerweise maßstabsgetreu zueinander gezeigt.

In den Figuren der Zeichnung sind gleiche, funktionsgleiche und gleichwirkende Elemente, Merkmale und Komponenten - sofern nichts anderes ausgeführt ist - jeweils mit denselben Bezugszeichen versehen.

### BESCHREIBUNG VON AUSFÜHRUNGSBEISPIELEN

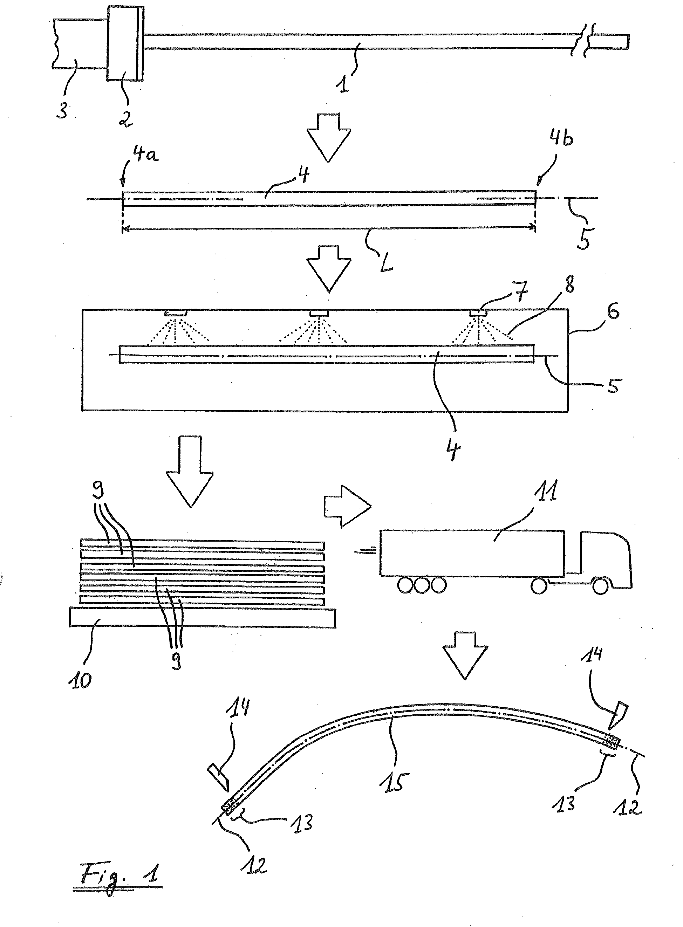

In Figur 1 sind die Verfahrensschritte eines Verfahrens zur Herstellung eines zumindest abschnittsweise lackierten Kunststoffteils gemäß einem Ausführungsbeispiel der Erfindung dargestellt.

In einem ersten Verfahrensschritt wird ein Kunststoffmaterial, insbesondere ein thermoplastisches Kunststoffmaterial, mittels eines Extrusionswerkzeugs 2 und eines das Kunststoffmaterial in an sich bekannter Weise aufschmelzenden und unter Druck in das Extrusionswerkzeug 2 fördernden Extruders 3 zu einem Strang 1 extrudiert.

Durch Ablängen des Strangs 1 wird anschließend ein zwei Enden 4a und 4b aufweisender Grundkörper 4 gebildet. Der Grundkörper 4 hat die Gestalt eines langgestreckten Profils, wobei eine Längsrichtung 5 des Grundkörpers 4 im Wesentlichen geradlinig verläuft. Zwischen seinen Enden 4a und 4b weist der Grundkörper 4 eine vorbestimmte Länge L auf.

Anschließend wird der sich nach wie vor im Wesentlichen geradlinig erstreckende, langgestreckte Grundkörper 4 beispielsweise in einer hierfür geeigneten Lackiervorrichtung 6, welche mit Einrichtungen 7 zum Aufbringen eines Lacks 8 auf den Grundkörper 4 versehen ist, lackiert. Bei dem hier dargestellten Ausführungsbeispiel wird der Grundkörper 4 vollständig lackiert, dies ist jedoch nicht zwingend erforderlich und es kommt auch ein nur abschnittsweises Lackieren des Grundkörpers 4 in Betracht. Während das Lackieren, wie in Fig. 1 schematisch dargestellt, durch Zerstäuben des Lacks 8 erfolgen kann, ist in einer Variante auch ein Tauchlackieren des Grundkörpers 4 möglich.

Bei dem Lackieren können eine oder mehrere Lackschichten auf den Grundkörper 4 aufgetragen werden. Zumindest eine der Lackschichten enthält einen Stoff aus der Gruppe der Polyurethane, wodurch der Lack oder das Lacksystem, mit dem der Grundkörper 4 lackiert ist, eine gewisse Elastizität erhält. Es kann zum Beispiel ein wässriges Polyurethan-Lacksystem zum Einsatz kommen.

Wenngleich dies in Figur 1 der Übersicht halber nicht dargestellt ist, kann vor dem Lackieren noch eine Vorkonfektionierung des Grundkörpers 4 erfolgen.

Gemäß dem Ausführungsbeispiel der Figur 1 wird eine gewünschte Anzahl von Grundkörpern 4 auf die vorstehend beschriebene Weise extrudiert und lackiert. Nach dem Aushärten des Lacks 8 bzw. der Lackschichten bildet jeder der Grundkörper 4 zusammen mit der auf ihn vollflächig oder abschnittsweise aufgetragenen Lackschicht oder Lackschichten einen streckbiegbaren, zumindest abschnittsweise lackierten Grundkörper 9. Die lackierten Grundkörper 9 besitzen weiterhin die Gestalt langgestreckter, geradliniger Profile mit der Längsrichtung 5, die, wie in der Figur 1 beispielhaft gezeigt, in einem weiteren Verfahrensschritt auf einfache und vorteilhafte Weise, zum Beispiel auf einer Palette 10, eng gepackt werden können, ohne dass die ganz oder abschnittsweise lackierten Grundkörper 9 hierbei eine Beschädigung, insbesondere eine Schädigung der lackierten Oberflächenabschnitte oder eine ungünstige Verformung, erfahren. Anschließend können die lackierten Grundkörper 9, die, wie dargestellt, dicht und eng gepackt sind, mit hoher Ladungsdichte kostengünstig versandt bzw. transportiert werden, beispielsweise mittels eines LKW 11 oder eines anderen geeigneten Transportmittels. Bevorzugt werden die zumindest abschnittsweise lackierten Grundkörper 9 hierbei vor dem Transportieren oder Versenden in der Weise verpackt, dass die Grundkörper 9 beim Transport bzw. Versand nicht beschädigt werden. Wegen der einfachen, geradlinigen Ausbildung der Grundkörper 9 bedarf es hierbei keiner aufwändigen Halte- oder Stützvorrichtungen, stattdessen kann einfaches, kostengünstiges Packmaterial verwendet werden.

Das Extrudieren, das Lackieren und das Verpacken der Grundkörper 4, 9 kann zum Beispiel bei einem Zulieferer erfolgen. Anschließend können die vollflächig oder zumindest abschnittsweise lackierten Grundkörper 9, wie beschrieben, zu einem Kraftfahrzeughersteller, beispielsweise einem Automobilhersteller, transportiert werden. Insbesondere können die vollflächig oder zumindest abschnittsweise lackierten Grundkörper 9 auch zu unterschiedlichen Automobilwerken, beispielsweise auf verschiedenen Kontinenten transportiert werden. Vor Ort werden die Grundkörper 9 bei dem Automobilhersteller, zum Beispiel in dessen Werkstätten oder in deren unmittelbarer Nähe, entpackt und nachfolgend einem Streckbiegen unterzogen. Durch das Streckbiegen wird der zumindest abschnittsweise lackierte Grundkörper 9 gestreckt, beispielsweise um ca. 2 Prozent seiner Länge L, und verformt, wodurch ein Kunststoffteil 15 erzeugt wird. Das Kunststoffteil 15 ist somit ebenfalls zumindest abschnittsweise lackiert. Durch die oben beschriebene Wahl des Lackes 8 wird durch dessen Elastizität vermieden, dass bei dem Streckbiegevorgang in Folge der eingebrachten Spannungen in das Bauteil der Lack 8 bzw. die Lackschichten abplatzen oder sich verfärben. Aufgrund dessen, dass die Grundkörper beispielsweise für alle Automobilwerke zuvor in derselben Lackieranlage lackiert wurden, kann an jedem Automobilwerk die gleiche Oberflächenqualität der Kunststoffteile gewährleistet werden. Gleichzeitig wird mit dem Schritt des Streckbiegens vor Ort bzw. in der Nähe des Automobilwerks ein hoher Local Content erreicht. Das Kunststoffteil 15 weist nach dem Streckbiegen eine Längsrichtung 12 auf, welche einer zweidimensionalen oder auch dreidimensionalen Raumkurve folgt.

Die oben beschriebene Länge L des Grundkörpers 4 ist hinreichend groß gewählt, um den Streckbiegevorgang zu ermöglichen, mit anderen Worten, der Grundkörper 4 und somit auch der zumindest abschnittsweise lackierte Grundkörper 9 weisen eine gewisse Überlänge auf. Nach dem Streckbiegen können Enden des Kunststoffteils 15 beschnitten werden, um dem Kunststoffteil 15 seine vorbestimmte Länge zu geben. Hierzu können mittels geeigneter Schneid- oder Trenneinrichtungen 14 Endabschnitte 13 des Kunststoffteils 15 abgetrennt werden. Diese können ebenfalls zumindest abschnittsweise lackiert sein. Damit wird erreicht, dass das Abtrennen der Endabschnitte unabhängig von einem etwaigen Ende der Lackierung ist. Alternativ können die Endabschnitte auch abschnittsweise von der Lackierung ausgespart sein, um so den Lackverbrauch zu minimieren. Somit sind die beim Beschneiden abgetrennten Endabschnitte zumindest abschnittsweise nicht lackiert.

Bei dem zumindest abschnittsweise lackierten Kunststoffteil 15 der Figur 1 handelt es sich bevorzugt um eine Dachzierleiste für ein Automobil.

In einer Variante des in Figur 1 dargestellten Ausführungsbeispiels der Erfindung kann an die Stelle des Transportierens der vollständig oder abschnittsweise lackierten Grundkörper 9, zum Beispiel mittels des skizzierten LKW 11 oder eines anderen geeigneten Transportmittels, falls gewünscht auch ein Zwischenlagern der zumindest abschnittsweise lackierten Grundkörper 9 erfolgen, wobei auch bei einem derartigen Zwischenlagern vorteilhaft auf aufwändige Halte- oder Stützvorrichtungen und entsprechende aufwändige Verpackungen verzichtet werden kann.

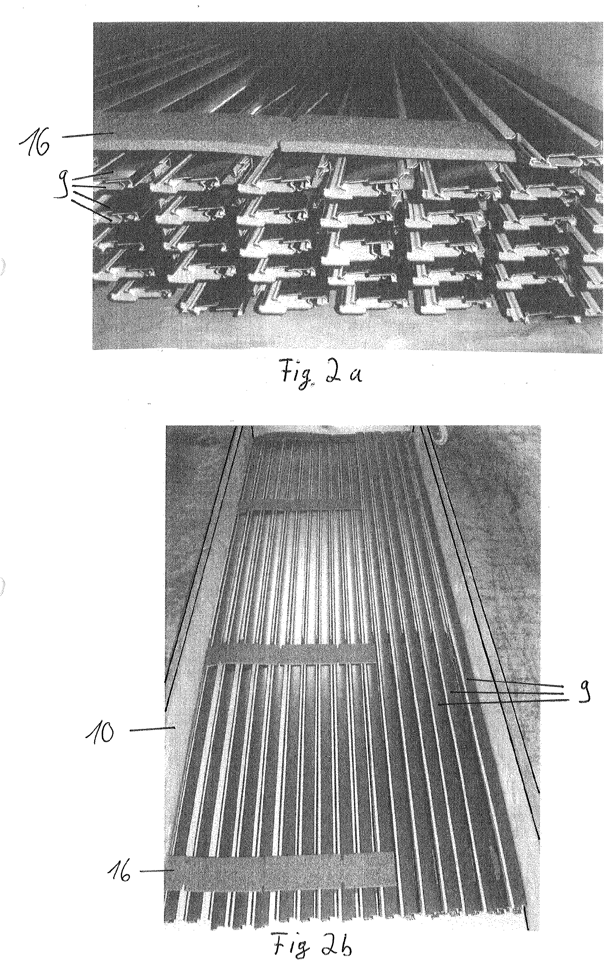

Die Figuren 2a und 2b zeigen eine Darstellung verpackter, dicht gepackter, zumindest abschnittsweise lackierter Grundkörper. Die lackierten Grundkörper 9 besitzen hier ebenfalls die Gestalt langgestreckter, geradliniger Profile, die auf einfache und vorteilhafte Weise auf einer Palette oder in einer Kiste 10, eng gepackt werden können, ohne dass die ganz oder abschnittsweise lackierten Grundkörper 9 hierbei eine Beschädigung, insbesondere eine Schädigung der lackierten Oberflächenabschnitte oder eine ungünstige Verformung, erfahren. Anschließend können die in der Kiste dicht und eng gepackten, lackierten Grundkörper 9 mit hoher Ladungsdichte kostengünstig versandt bzw. transportiert werden. In der dargestellten Weise sind die zumindest abschnittsweise lackierten Grundkörper 9 hierbei vor dem Transportieren oder Versenden in der Weise verpackt, dass die Grundkörper 9 beim Transport bzw. Versand nicht beschädigt werden. Wegen der einfachen, geradlinigen Ausbildung der Grundkörper 9 kann dafür kostengünstiges Packmaterial 16, beispielsweise Einlagen aus Schaumstoff, Blisterfolie, Karton oder dergleichen verwendet werden.

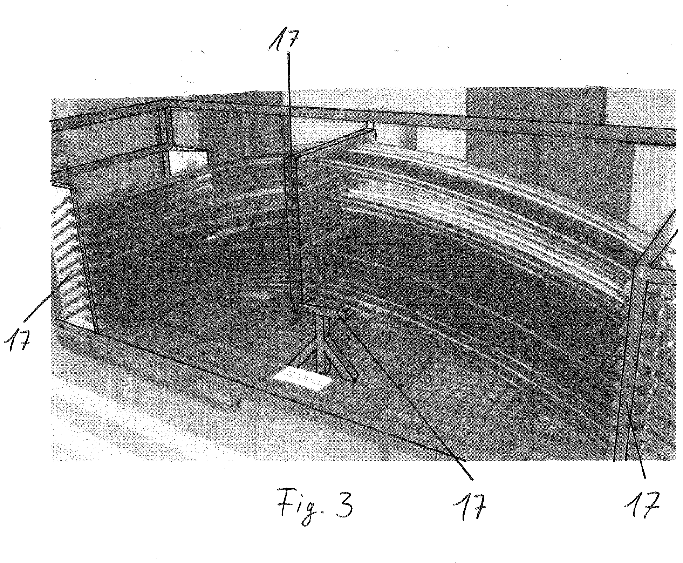

Figur 3 zeigt eine Darstellung von verpackten, bereits gebogenen Kunststoffteilen. Diese Darstellung illustriert den Unterschied eines herkömmlichen Verfahrens hinsichtlich der Transportierbarkeit, der Packbarkeit und insbesondere der Packungsdichte zu einem erfindungsgemäßen Verfahren. Bei den in Figur 2a und 2b gezeigten, erfindungsgemäß gepackten, zumindest abschnittsweise lackierten Grundkörper sind in einer Kiste 10, beispielsweise mit Abmaßen von 2500 mm x 800 mm x 1000 mm, 1088 Stück der zumindest abschnittsweise lackierten Grundkörper packbar. Die Packungsdichte beträgt dabei beispielsweise 544 Stück/m³. Bei den in Figur 3 dargestellten, bereits umgeformten Kunststoffteilen, die auf herkömmliche Weise verpackt sind, ist hingegen eine speziell dafür vorgesehene Transportbox notwendig. Eine derartige Transportbox ist mit aufwändigen Vorrichtungen 17 versehen. Die aufwändigen Vorrichtungen sind beim Transport, beim Versand oder bei der Zwischenlagerung fertiger Kunststoffteile erforderlich, um während des Transports oder der Lagerung gegenseitige Berührung sowie unzulässige Zug-, Druck- oder Biegebelastungen zu vermeiden, die zu einer plastischen Verformung der fertigen Kunststoffteile führen und deren Formgenauigkeit somit beeinträchtigen könnten. Die in Figur 3 dargestellte Transportbox weist beispielsweise Abmaße von 2800 mm x 800 mm x 1000 mm auf und kann dabei lediglich 80 Stück der Kunststoffteile aufnehmen. Die Packungsdichte beträgt dabei etwa 35,7 Stück/m³. Somit unterscheidet sich die Packungsdichte etwa um den Faktor 15,2. Das heißt ein in der Anordnung aus Figur 3 transportiertes Kunststoffteil nimmt für den beschädigungsfreien Transport ein etwa um den Faktor 15,2 größeres Ladevolumen in Anspruch als ein verpackter, zumindest abschnittsweise lackierter Grundkörper aus Fig. 2a bzw. 2b. Aus der erfindungsgemäß verbesserten Ausnutzung des Ladevolumens resultieren deutlich niedrigere Transportkosten. Aus der vereinfachten Verpackung kann sich zudem ein vereinfachtes Handling der zumindest abschnittsweise lackierten Grundkörper ergeben.

Obwohl die vorliegende Erfindung anhand des bevorzugten Ausführungsbeispiels vorstehend vollständig beschrieben wurde, ist sie darauf nicht beschränkt, sondern auf vielfältige Art und Weise modifizierbar.

Bei dem zumindest abschnittsweise lackierten Kunststoffteil kann es sich zum Beispiel auch um eine beliebige andere Zierleiste, Abdeck- oder Verkleidungsleiste für ein Kraftfahrzeug, insbesondere für ein Automobil, handeln.

Darüber hinaus ist es auch denkbar, das vorstehend beschriebene Verfahren zur Herstellung von lackierten Kunststoffteilen, die bei anderen Fortbewegungsmitteln oder auch bei der Verkleidung oder Verzierung von Gebäuden oder anderen Bauwerken Verwendung finden sollen, einzusetzen.

### BEZUGSZEICHENLISTE

- 1: Strang
- 2: Extrudierwerkzeug
- 3: Extruder
- 4: Grundkörper
- 4a: Ende (Grundkörper)
- 4b: Ende (Grundkörper)
- 5: Längsrichtung (Grundkörper)
- 6: Lackiervorrichtung
- 7: Einrichtung zum Aufbringen von Lack
- 8: Lack
- 9: zumindest abschnittsweise lackierter Grundkörper
- 10: Palette
- 11: LKW
- 12: Längsrichtung (Kunststoffteil)
- 13: Endabschnitt (Kunststoffteil)
- 14: Schneid- oder Trenneinrichtung
- 15: zumindest abschnittsweise lackiertes Kunststoffteil
- 16: Verpackungsmaterial
- 17: Vorrichtungen

- L: Länge (Grundkörper)

## Patentansprüche

1. Verfahren zur Herstellung eines zumindest abschnittsweise lackierten Kunststoffteils (15), insbesondere für ein Kraftfahrzeug, welches einen ein Kunststoffmaterial enthaltenden Grundkörper (4) aufweist, der zu einer weiteren Formgebung, insbesondere durch Streckbiegen, vorgesehen ist, mit den Schritten:
- Extrudieren des Kunststoffmaterials zur Erzeugung des Grundkörpers (4);
- zumindest abschnittsweise Lackieren des Grundkörpers (4);
- Verpacken des zumindest abschnittsweise lackierten Grundkörpers (9) zum beschädigungsfreien Transport oder Versand und/oder zur Zwischenlagerung, wobei der zumindest abschnittsweise lackierte Grundkörper (9) zusammen mit weiteren, zumindest abschnittsweise lackierten Grundkörpern (9) gepackt wird;
- Transportieren oder Versenden und/oder Zwischenlagern des verpackten, zumindest abschnittsweise lackierten Grundkörpers;
- Entpacken des zumindest abschnittsweise lackierten Grundkörpers; und
- Formgebung des zumindest abschnittsweise lackierten Grundkörpers, insbesondere durch Streckbiegen.

2. Verfahren nach Anspruch 1,
**dadurch gekennzeichnet,**
**dass** der zumindest abschnittsweise lackierte Grundkörper (9) bei dem Verpacken zusammen mit weiteren, zumindest abschnittsweise lackierten Grundkörpern (9) dicht gepackt wird.

3. Verfahren nach Anspruch 2,
**dadurch gekennzeichnet,**
**dass** die Packungsdichte der verpackten, zumindest abschnittsweise lackierten Grundkörper bei 350 bis 750 Stück/m³, insbesondere bei 450 bis 650 Stück/m³, bevorzugt bei 500 bis 600 Stück/m³ liegt.

4. Verfahren nach einem der vorstehenden Ansprüche,
**dadurch gekennzeichnet,**
**dass** das Formgeben des zumindest abschnittsweise lackierten Grundkörpers (9) mittels Streckbiegen erfolgt.

5. Verfahren zur Herstellung eines zumindest abschnittsweise lackierten Kunststoffteils (15), welches einen ein Kunststoffmaterial enthaltenden Grundkörper (4) aufweist, insbesondere für ein Kraftfahrzeug, mit den Schritten:
- Extrudieren des Kunststoffmaterials zur Erzeugung des Grundkörpers (4);
- zumindest abschnittsweise Lackieren des Grundkörpers (4); und
- Streckbiegen des zumindest abschnittsweise lackierten Grundkörpers (9) zur Bildung des zumindest abschnittsweise lackierten Kunststoffteils (15).

6. Verfahren nach Anspruch 5,
**dadurch gekennzeichnet,**
**dass** der zumindest abschnittsweise lackierte Grundkörper (9) vor dem Streckbiegen transportiert oder versandt wird.

7. Verfahren nach einem der Ansprüche 4 bis 6,
**dadurch gekennzeichnet,**
**dass** der zumindest abschnittsweise lackierte Grundkörper (9) bei dem Streckbiegen in der Weise gekrümmt wird, dass eine Längsrichtung (12) des zumindest abschnittsweise lackierten Kunststoffteils (15) einer zweidimensionalen oder dreidimensionalen Raumkurve folgt.

8. Verfahren nach einem der Ansprüche 4 bis 7,
**dadurch gekennzeichnet,**
**dass** Enden des zumindest abschnittsweise lackierten Kunststoffteils (15) nach dem Streckbiegen beschnitten werden, um das zumindest abschnittsweise lackierte Kunststoffteil (15) mit einer vorbestimmten Länge zu versehen.

9. Verfahren nach einem der vorstehenden Ansprüche,
**dadurch gekennzeichnet,**
**dass** der Grundkörper (4) in der Weise als ein langgestrecktes Profil ausgebildet wird, dass eine Längsrichtung (5) des Grundkörpers (4) im Wesentlichen geradlinig verläuft.

10. Verfahren nach einem der vorstehenden Ansprüche,
**dadurch gekennzeichnet,**
**dass** das zumindest abschnittsweise Lackieren des Grundkörpers (4) mit einem Lack (8) erfolgt, welcher einen Kunststoff aus der Gruppe der Polyurethane aufweist.

11. Zumindest abschnittsweise lackiertes Kunststoffteil (15), hergestellt mittels eines Verfahrens nach einem der vorstehenden Ansprüche 4 bis 10.

12. Kunststoffteil nach Anspruch 11,
**dadurch gekennzeichnet,**
**dass** das zumindest abschnittsweise lackierte Kunststoffteil (15) als eine Dachzierleiste, insbesondere für ein Automobil, ausgebildet ist.

## Claims

1. Method for producing a plastics material part (15) painted at least in portions, in particular for a motor vehicle, which has a base body (4) containing a plastics material and provided for a further shaping, in particular by stretch-bending, comprising the steps of:
- extruding the plastics material to produce the base body (4);
- painting the base body (4) at least in portions;
- packing the base body (9) painted at least in portions for damage-free transport or dispatch and/or for temporary storage, the base body (9) painted at least in portions being packed together with further base bodies (9) painted at least in portions;
- transporting or dispatching and/or temporarily storing the packed base body painted at least in portions;
- unpacking the base body painted at least in portions; and
- shaping the base body painted at least in portions, in particular by stretch-bending.

2. Method according to claim 1,
**characterised**
**in that** during the packing the based body (9) painted at least in portions is packed tightly together with further base bodies (9) painted at least in portions.

3. Method according to claim 2,
**characterised**
**in that** the packing density of the packed base bodies painted at least in portions is 350 to 750 items/m³, in particular 450 to 650 items/m³, preferably 500 to 600 items/m³.

4. Method according to any of the preceding claims,
**characterised**
**in that** the base body (9) painted at least in portions is shaped by stretch-bending.

5. Method for producing a plastics material part (15) painted at least in portions which has a base body (4) containing a plastics material, in particular for a motor vehicle, comprising the steps of:
- extruding the plastics material to produce the base body (4);
- painting the base body (4) at least in portions; and
- stretch-bending the base body (9) painted at least in portions to form the plastics material part (15) painted at least in portions.

6. Method according to claim 5,
**characterised**
**in that** the base body (9) painted at least in portions is transported or dispatched before the stretch-bending.

7. Method according to any of claims 4 to 6,
**characterised**
**in that** the base body (9) painted at least in portions is curved in such a way during the stretch-bending that a longitudinal direction (12) of the plastics material part (15) painted at least in portions follows a two-dimensional or three-dimensional curve in space.

8. Method according to any of claims 4 to 7,
**characterised**
**in that** ends of the plastics material part (15) painted at least in portions are trimmed after the stretch-bending so as to provide the plastics material part (15) painted at least in portions with a predetermined length.

9. Method according to any of the preceding claims,
**characterised**
**in that** the base body (4) is formed as an elongate profile in such a way that a longitudinal direction (5) of the base body (4) extends substantially in a straight line.

10. Method according to any of the preceding claims,
**characterised**
**in that** the base bodies (4) are painted at least in portions using a paint (8) comprising a plastics material from the group of polyurethanes.

11. Plastics material part (15) painted at least in portions, produced by a method according to any of preceding claims 4 to 10.

12. Plastics material part according to claim 11,
**characterised**
**in that** the plastics material part (15) painted at least in portions is formed as a roof trim strip, in particular for an automobile.

## Revendications

1. Procédé de fabrication d'une pièce plastique (15) au moins partiellement peinte, en particulier pour un véhicule à moteur, laquelle comporte un corps de base (4) contenant un matériau plastique et qui est prévu pour une mise en forme supplémentaire, en particulier par cintrage par étirage, avec les étapes :
- extrusion du matériau plastique afin d'obtenir le corps de base (4) ;
- peinture au moins partielle du corps de base (4) ;
- emballage du corps de base au moins partiellement peint (9) pour transport ou expédition sans endommagement et/ou pour stockage intermédiaire, dans lequel le corps de base au moins partiellement peint (9) et d'autres corps de base au moins partiellement peints (9) sont emballés ensemble ;
- transport ou expédition et/ou stockage intermédiaire des corps de base au moins partiellement peints emballés ;
- déballage des corps de base au moins partiellement peints ; et
- mise en forme du corps de base au moins partiellement peint, en particulier par cintrage par étirage.

2. Procédé d'après la revendication 1,
**caractérisé en ce**
**que**, lors de l'emballage, les corps de base au moins partiellement peints (9) qui sont emballés ensemble sont emballés de manière compacte.

3. Procédé d'après la revendication 2,
**caractérisé en ce**
**que** la densité d'emballage des corps de base au moins partiellement peints (9) emballés est de 350 à 750 pièces/m³, en particulier de 450 à 650 pièces/m³, de préférence de 500 à 600 pièces/m³.

4. Procédé d'après l'une des revendications précédentes,
**caractérisé en ce**
**que** la mise en forme du corps de base au moins partiellement peint (9) s'effectue au moyen du cintrage par étirage.

5. Procédé de fabrication d'une pièce plastique (15) au moins partiellement peinte, laquelle comporte un corps de base (4) contenant un matériau plastique, en particulier pour un véhicule à moteur, avec les étapes :
- extrusion du matériau plastique afin d'obtenir le corps de base (4) ;
- peinture au moins partielle du corps de base (4) ; et
- cintrage par étirage du corps de base au moins partiellement peint (9) pour former la pièce plastique au moins partiellement peinte (15).

6. Procédé d'après la revendication 5,
**caractérisé en ce**
**que** le corps de base au moins partiellement peint (9) est transporté ou expédié avant le cintrage par étirage.

7. Procédé d'après l'une des revendications 4 à 6,
**caractérisé en ce**
**que** le corps de base au moins partiellement peint (9) est courbé lors du cintrage par étirage de telle façon qu'une direction longitudinale (12) de la pièce plastique au moins partiellement peinte (15) suit une courbe spatiale bidimensionnelle ou tridimensionnelle.

8. Procédé d'après l'une des revendications 4 à 7,
**caractérisé en ce**
**que** les extrémités de la pièce plastique au moins partiellement peinte (15) sont coupées après le cintrage par étirage, afin que la pièce plastique au moins partiellement peinte (15) ait une longueur prédéterminée.

9. Procédé d'après l'une des revendications précédentes,
**caractérisé en ce**
**que** le corps de base (4) est conçu sous forme d'un profil allongé de telle façon qu'une direction longitudinale (5) du corps de base (4) est essentiellement rectiligne.

10. Procédé d'après l'une des revendications précédentes,
**caractérisé en ce**
**que** la peinture au moins partielle du corps de base (4) s'effectue avec une peinture (8) comportant un plastique du groupe des polyuréthanes.

11. Pièce plastique au moins partiellement peinte (15), fabriquée au moyen d'un procédé d'après l'une des revendications précédentes 4 à 10.

12. Pièce plastique d'après la revendication 11,
**caractérisée en ce**
**que** la pièce plastique au moins partiellement peinte (15) est réalisée comme une moulure de toit, en particulier pour une automobile.
